# EUROPÄISCHE PATENTSCHRIFT

(11) **EP 3 794 690 B1**
(45) Veröffentlichungstag und Bekanntmachung des Hinweises auf die Patenterteilung: **10.04.2024**
(21) Anmeldenummer: 19725345.3
(22) Anmeldetag: 16.05.2019
(51) Int. Cl.: H01R 43/055, B65G 47/14

(54) **CRIMPMASCHINE**
CRIMPING MACHINE
MACHINE DE SERTISSAGE

(30) Priorität: 18.05.2018 DE 102018112112; 05.07.2018 DE 102018116342
(43) Veröffentlichungstag der Anmeldung: 24.03.2021
(73) Patentinhaber: Zoller & Fröhlich GmbH, 88239 Wangen im Allgäu (DE)
(72) Erfinder: FRÖHLICH, Christoph, 88239 Wangen (DE); LEUPOLZ, Hans, 88260 Argenbühl (DE); HARTINGER, Steffen, 88239 Wangen (DE); MENNIG, Michael, 88410 Bad Wurzach (DE); BUCHNER, Richard, 88299 Leutkirch (DE)
(74) Vertreter: Winter, Brandl - Partnerschaft mbB
(86) Internationale Anmeldenummer: PCT/EP2019/062742
(87) Internationale Veröffentlichungsnummer: WO 2019/219880

(56) Entgegenhaltungen:
- CN-A- 107 394 557
- CN-B- 105 703 195
- US-A- 5 511 307

## Beschreibung

Die Erfindung betrifft eine Crimpmaschine gemäß dem Oberbegriff des Patentanspruches 1.

Eine derartige Crimpmaschine ist beispielsweise aus der Patentschrift DE 44 40 835 C1 der Anmelderin bekannt und dient dazu, Aderendhülsen mit einem abisolierten Kabelende zu verpressen. Diese Aderendhülsen werden bei der bekannten Lösung als Gurtband auf einem Trommelmagazin aufgerollt und von diesem über eine Transporteinheit zu einem Crimpkopf gefördert. Alternativ können die Aderendhülsen bzw. Kontaktelemente auch vereinzelt in einem Speicher aufgenommen sein und dann über eine geeignete Zuführeinrichtung lagedefiniert zum Crimpkopf gefördert werden. Eine derartige Zuführeinrichtung ist beispielsweise in der DE 198 31 588 A1 beschrieben.

Die zu vercrimpende Aderendhülse wird bei den bekannten Lösungen mittels einer Halteeinheit auf das abisolierte Kabelende aufgesetzt und dann über den Crimpkopf verpresst. Das Abisolieren des Kabelendes kann entweder extern oder über einen in die Crimpmaschine integrierten Abisolierkopf erfolgen.

Der Aufbau einer Transporteinheit zum Fördern der auf einem Gurtband angeordneten Aderendhülsen oder sonstiger elektrischer Bauteile ist beispielsweise in der Druckschrift G 93 08 266.5 der Anmelderin beschrieben. Eine ähnliche Transporteinheit ist auch in der DE 197 14 964 C1 offenbart.

In der Serienproduktion ist es erforderlich, unterschiedliche Kabelquerschnitte und elektrische Bauelemente/Kontaktelemente miteinander zu verpressen und dann in einem folgenden Montageschritt, beispielsweise beim Montieren eines Schaltschranks zu verbauen. Hierzu gibt es einige Möglichkeiten: bei einer Variante wird die Crimpmaschine zum Verpressen unterschiedlicher Kabelquerschnitte und/oder Kontaktelemente (Aderendhülsen) umgerüstet oder aber es werden mehrere Crimpmaschinen zur Verarbeitung der unterschiedlichen Kabelquerschnitte/Kontaktelemente vorgesehen. Die erstgenannte Lösung bedarf hoher Rüstzeiten und eines erheblichen Personalaufwandes. Ein weiterer Nachteil besteht darin, dass die Gefahr besteht, einen falschen Kabelquerschnitt einzulegen, sodass die Ausschussquote erhöht ist. Dieser Nachteil wird bei der letztgenannten Lösung mit einer Vielzahl von Crimpmaschinen überwunden - die Investitionskosten sind jedoch erheblich.

In der Druckschrift DE 10 2004 057 818 B3 ist eine Maschine (als Stripper, Crimper) ausgeführt offenbart, mit der unterschiedliche Kabelquerschnitte und Aderendhülsen verarbeitbar sind. Dabei sind für unterschiedliche Aderendhülsentypen jeweils ein Trommelmagazin oder für einen Kabelquerschnitt mehrere Trommelmagazine und eine zugehörige Crimpeinrichtung vorgesehen, denen ein gemeinsamer Antrieb zugeordnet ist, der wahlweise in Wirkeingriff mit einer der Crimpeinrichtungen bringbar ist. Eine derartige Lösung bedarf eines hohen vorrichtungstechnischen Aufwandes, da eine Vielzahl von Crimpeinrichtungen bereitgestellt und angesteuert sein muss.

In der auf die Anmelderin zurückgehenden DE 10 2015 119 217 A1 ist eine Crimpmaschine gezeigt, mit der die oben genannten Nachteile beseitigt sind. Diese Crimpmaschine hat eine Speicheranordnung mit mehreren Trommelmagazinen, denen je eine gemeinsame Transporteinheit sowie ein gemeinsamer, vorzugsweise zentraler Crimpkopf zugeordnet sind, so dass der vorrichtungstechnische Aufwand gegenüber der vorbeschriebenen Lösung deutlich verringert ist.

Die ebenfalls auf die Anmelderin zurückgehende DE 10 2015 102 060 A1 zeigt eine Crimpmaschine, bei der unterschiedliche Aderendhülsen in einer Speicheranordnung mit mehreren Trommelmagazinen vorgehalten werden. Jedem dieser Trommelmagazine ist eine Transporteinheit zugeordnet, über die die jeweils vorgewählte Aderendhülse in eine Übergabeposition transportiert wird. Die dort abgetrennte Aderendhülse wird dann mittels einer Zubringeinrichtung oder dergleichen zu einem gemeinsamen Crimpkopf geführt.

Diese Crimpmaschine zeichnet sich durch eine hohe Produktivität aus. Ein gewisser Nachteil wird jedoch darin gesehen, dass die benötigte Zubringeinrichtung vergleichsweise komplex aufgebaut ist und dementsprechenden Bauraum beansprucht, und keine Abisolierung möglich ist.

In der nach dem Prioritätsdatum dieser Anmeldung veröffentlichten DE 10 2017 118 968 der Anmelderin ist eine Crimpmaschine offenbart, bei der ein zu vercrimpendes Kontaktelement ohne Zwischenschaltung einer Zubringeinrichtung oder dergleichen direkt in den Wirkungsbereich eines Crimpkopfs geführt ist. Bei dieser bekannten Lösung sind die Kontaktelemente vorzugsweise in Trommelmagazinen gespeichert, so dass entsprechend die Crimpmaschine mit einer Vereinzelungseinrichtung ausgeführt sein muss. Eine Verarbeitung von vereinzelten Kontaktelementen ist nicht oder nur bedingt möglich.

Die US 5,511,307 offenbart eine Crimpmaschine mit zwei nebeneinanderliegenden Zuführtöpfen mit einer jeweiligen Vibrationseinheit.

Die CN 105703195 B offenbart eine Crimpmaschine mit mehreren nebeneinanderliegenden Zuführtöpfen mit einer jeweiligen Vibrationseinheit.

Die CN 107394557 A offenbart eine Crimpmaschine mit acht nebeneinanderliegenden Zuführtöpfen mit einer jeweiligen Vibrationseinheit.

Demgegenüber liegt der Erfindung die Aufgabe zugrunde, eine zum Strippen (Abisolieren) und Crimpen geeignete Maschine zu schaffen, durch die bei vergleichsweise einfachem Aufbau eine flexible Fertigung ermöglicht ist. Insbesondere soll die Flexibilität erhöht und der vorrichtungstechnische Aufwand reduziert werden.

Diese Aufgabe wird durch eine Crimpmaschine mit den Merkmalen des Patentanspruches 1 gelöst.

Vorteilhafte Weiterbildungen der Erfindung sind Gegenstand der Unteransprüche.

Die erfindungsgemäße Crimpmaschine dient zum Verpressen von Kontaktelementen mit einem Endabschnitt eines Leiters, beispielsweise eines Kabelendes. Die Crimpmaschine hat eine Speicheranordnung für vereinzelte Kontaktelemente und eine Einrichtung zum Transport des Kontaktelementes. Die Crimpmaschine hat des Weiteren, vorteilhafterweise eine Zentriereinrichtung zum Positionieren des Leiterendabschnittes mit Bezug zu einem Crimpkopf, über den das Kontaktelement mit dem Endabschnitt des Leiters (Kabelende) vercrimpt wird. Die Ansteuerung der Komponenten der Crimpmaschine erfolgt mittels einer Steuereinheit.

Erfindungsgemäß hat die Speicheranordnung eine Vielzahl von Zuführtöpfen, in denen unterschiedliche Kontaktelemente, beispielsweise Aderendhülsen aufgenommen sind. Diese Zuführtöpfe sind mit einem Vibrationsantrieb ausgeführt, wobei mehreren Zuführtöpfen ein gemeinsamer Vibrationsantrieb zugeordnet ist. Die Ansteuerung der Zuführtöpfe, insbesondere deren Vibrationsantrieb, erfolgt über die Steuereinheit, so dass wahlweise einer der Zuführtöpfe fördert.

Bei einem Ausführungsbeispiel der Erfindung sind alle Zuführtöpfe mit dem gemeinsamen Vibrationsantrieb ausgeführt. Damit ist der vorrichtungstechnische Aufwand der Crimpmaschine minimiert.

Bei einer besonders bevorzugten Weiterbildung der Erfindung sind mehr als zwei Zuführtöpfe vorgesehen. Damit ist die Flexibilität der Crimpmaschine erhöht.

Die Zuführtöpfe und der gemeinsame Vibrationsantrieb sind beispielsweise an eine z.B. quadratische und/oder plattenförmige Auflage, beispielsweise einer Deckwandung oder Deckfläche gekoppelt.

Vorzugsweise sind die Zuführtöpfe an einer Oberseite der Deckfläche angeordnet, während der gemeinsame Vibrationsantrieb an einer Unterseite der Deckfläche angeordnet ist.

Der gemeinsame Vibrationsantrieb kann die Zuführtöpfe indirekt über die Deckfläche in Vibration versetzen.

An der Oberseite der Deckfläche können die Zuführtöpfe variabel (z.B. übereinander oder nebeneinander) befestigt werden, um auf diese Weise verschiedene erfindungsgemäße Crimpmaschinen mit mehreren Gleichteilen produzieren zu können.

Die Anmelderin behält sich vor, auf die Anordnung von zumindest zwei Zuführtöpfen auf einer gemeinsamen Deckfläche, Plattform oder dergleichen eines Vibrationsantriebs einen unabhängigen Patentanspruch zu richten.

Bei einem Ausführungsbeispiel sind die Zuführtöpfe in einer Horizontalebene nebeneinanderliegend oder benachbart zueinander angeordnet. Dabei können sie linienförmig nebeneinanderliegend oder nach einem Muster, beispielsweise V- oder W-förmig angeordnet sein.

Alternativ können die Zuführtöpfe auch in Vertikalrichtung versetzt, beispielsweise übereinander angeordnet, vorzugsweise gestapelt sein.

Dabei können die Zuführtöpfe an einer Halterung gelagert werden, so dass sie zueinander beabstandet sind. Alternativ ist auch ein direktes Stapeln vorgesehen.

Das Beladen der Zuführtöpfe ist besonders einfach, wenn diese Halterung eine Schwenkeinrichtung zum Ausschwenken zumindest eines der Zuführtöpfe aus der Arbeitsposition hat.

Bei derjenigen Lösung, bei der die Zuführtöpfe nebeneinanderliegend angeordnet sind, werden diese vorzugsweise auf einem gemeinsamen Teilkreis oder zwei, oder mehr Teilkreisen angeordnet, wobei Transporteinheiten/Zuführeinrichtungen zentral angeordnet sind.

Bei einem Ausführungsbeispiel sind fünf oder mehr, beispielsweise sieben Zuführtöpfe vorgesehen. Diese können Kabelquerschnitten von 0,34 mm, 0,50 mm, 0,75 mm, 1,00 mm, 1,50 mm, 2,50 mm oder 4,00 mm zugeordnet sein. Selbstverständlich können auch andere Querschnitte verarbeitet werden.

Bei einem besonders bevorzugten Ausführungsbeispiel fördern alle Zuführtöpfe in eine gemeinsame Zuführung, über die die Kontaktelemente zum Crimpkopf gefördert werden.

Die Erfindung wird im Folgenden anhand schematischer Zeichnungen näher erläutert. Es zeigen:
Figur 1 eine schematische Darstellung eines Ausführungsbeispiels mit nebeneinanderliegenden Zuführtöpfen;
Figur 2 eine Variante mit in einem Stapel angeordneten Zuführtöpfen;
Figur 3 eine Weiterentwicklung des Konzepts gemäß Figur 2, wobei die Zuführtöpfe ausschwenkbar gelagert sind;
Figur 4 ein konkretes Ausführungsbeispiel einer Anordnung mit nebeneinanderliegenden Zuführtöpfen;
Figur 5 einen Zuführtopfstapel in einer ersten Ausführung und
Figur 6 einen Zuführtopfstapel in einer zweiten Ausführung;
Figur 7 ein Ausführungsbeispiel mit W-förmig angeordneten Zuführtöpfen und
Figur 8 eine dreidimensionale Darstellung des Ausführungsbeispiels gemäß Figur 7.

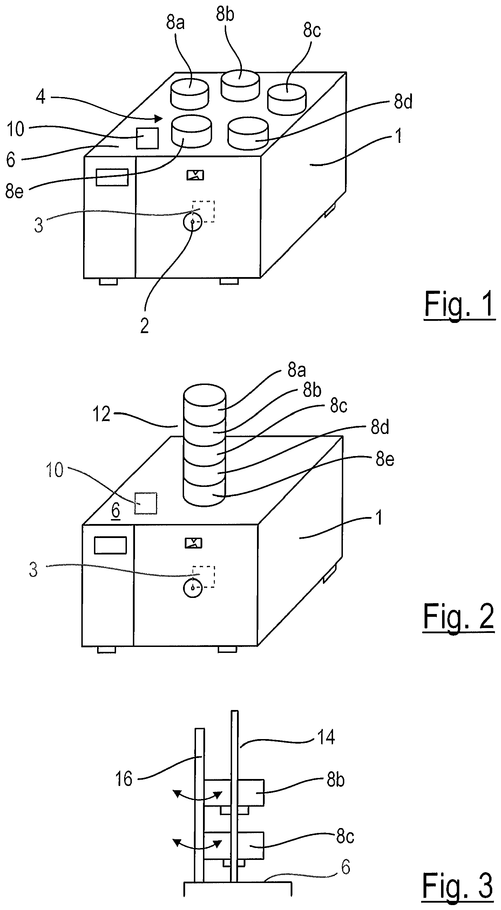

Figur 1 zeigt eine Crimpmaschine 1, deren Grundaufbau in der vorstehend genannten nachveröffentlichten DE 10 2017 118 968 offenbart ist, so dass hinsichtlich Details auf die diesbezüglichen Ausführungen verwiesen werden kann. Eine derartige Crimpmaschine 1 hat zumindest eine Zentrier- und Führungseinrichtung 2, über die die zu verarbeitenden Kabelenden zugeführt werden können. Die mit den Kabelenden zu vercrimpenden Kontaktelemente, vorzugsweise Aderendhülsen sind in einer Speicheranordnung 4 aufgenommen, die beispielsweise auf einer plattenförmigen Auflage, im Folgenden Deckfläche 6 genannt, eines Gehäuses der Crimpmaschine 1 angeordnet ist. In diesem Gehäuse ist der eigentliche Crimpkopf 3 vorgesehen, über den das Kabelende mit der Aderendhülse vercrimpt wird.

Erfindungsgemäß ist die Speicheranordnung 4 mit mehreren, beispielsweise mit fünf, oder mehr Zuführtöpfen 8 ausgeführt.

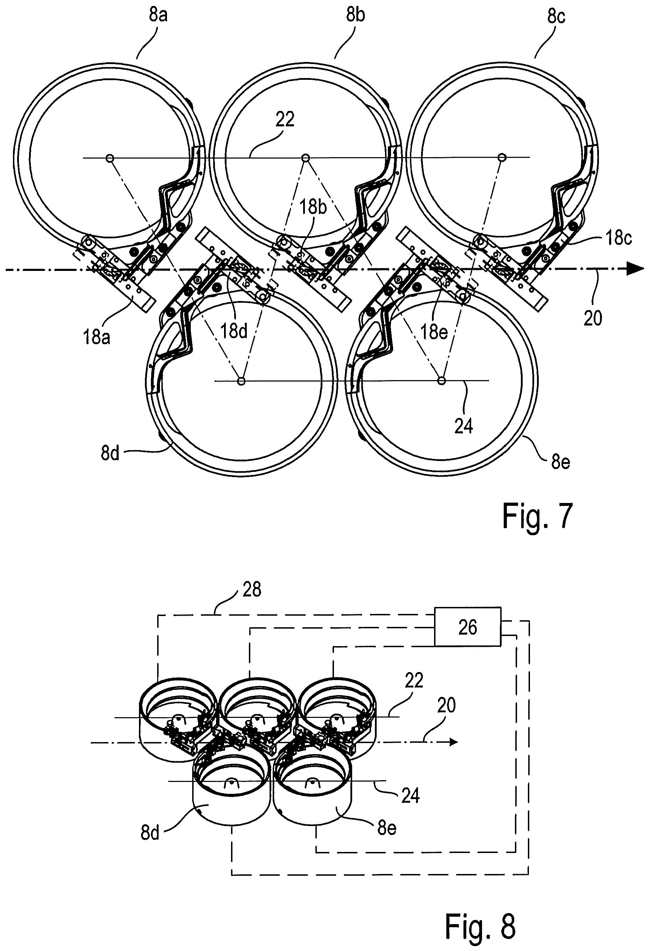

Bei dem in Figur 1 dargestellten Ausführungsbeispiel ist die Speicheranordnung 4 mit fünf auf einer Horizontalebene (bei diesem Ausführungsbeispiel die Auflage/Deckfläche 6 des Gehäuses) angeordneten Zuführtöpfen 8 ausgeführt, in denen unterschiedliche Aderendhülsentypen aufgenommen sind. Die Zuführtöpfe 8a bis 8e sind beim dargestellten Ausführungsbeispiel als Schwingfördertöpfe ausgeführt, denen erfindungsgemäß ein gemeinsamer Vibrationsantrieb 10 zugeordnet ist. Dieser ist in Figur 1 lediglich beispielhaft angeordnet - die Position wird so gewählt, dass eine optimale Wirkverbindung mit den Zuführtöpfen 8 erzielt wird. Bei dem dargestellten Ausführungsbeispiel sind die Zuführtöpfe 8 auf einem gemeinsamen Teilkreis angeordnet. Alternativ können die Zuführtöpfe 8 auch auf einer Achse nebeneinanderliegend oder aber nach einem geometrischen Muster (siehe Figur 7) positioniert werden. Die Positionierung erfolgt jedoch derart, dass die Ausgänge der jeweiligen Zuführtöpfe, im Folgenden Zuführeinrichtungen genannt, in einer gemeinsamen Förderstrecke/Fördereinrichtung im Folgenden Zuführung 20 genannt, münden bzw. mit dieser in Wirkverbindung stehen, so dass diese zugeführten, vereinzelten Aderendhülsen zum Crimpkopf 3 geführt werden können.

Die Zuführtöpfe 8 können jedoch auch in mehreren zueinander versetzen Ebenen angeordnet werden, so dass beispielsweise drei Zuführtöpfe 8 in einer ersten Ebene und zwei Zuführtöpfe 8 in einer weiteren Ebene angeordnet sind, denen dann jeweils ein Vibrationsantrieb oder ein gemeinsamer Vibrationsantrieb zugeordnet ist.

Figur 2 zeigt eine Variante der erfindungsgemäßen Crimpmaschine 1, bei der die Zuführtöpfe 8a bis 8e nicht in einer Horizontalebene, sondern als Stapel 12 angeordnet sind, der wiederum auf der Deckfläche 6 der Crimpmaschine 1 angeordnet ist. Auch diesem Stapel 12 ist ein gemeinsamer Vibrationsantrieb 10 zugeordnet, der vorzugsweise in der Achse des Stapels 12 angeordnet ist.

Um einen einfacheren Zugriff auf die innerhalb des Stapels liegenden Zuführtöpfe 8b bis 8e zu haben, können diese gemäß Figur 3 an einer mittigen Halterung 14 im Abstand zueinander oder auch in Vertikalrichtung verstellbar gelagert sein. Die Halterung 14 ist wiederum an der Deckfläche 6 abgestützt, die bei allen Ausführungsbeispielen als vergleichsweise massive Bodenplatte ausgeführt sein kann.

Beim Ausführungsbeispiel gemäß Figur 3 lassen sich die beispielhaft dargestellten Zuführtöpfe 8b, 8c über eine Schwenkeinrichtung 16 aus der mittigen Stapelposition herausschwenken, so dass das Beladen vereinfacht ist. Dabei wird es bevorzugt, wenn einzelne Zuführtöpfe 8a bis 8e herausschwenkbar sind. Prinzipiell kann es jedoch auch ausreichen, den gesamten Stapel 12 herauszuschwenken und dann die Zuführtöpfe 8 zu beladen.

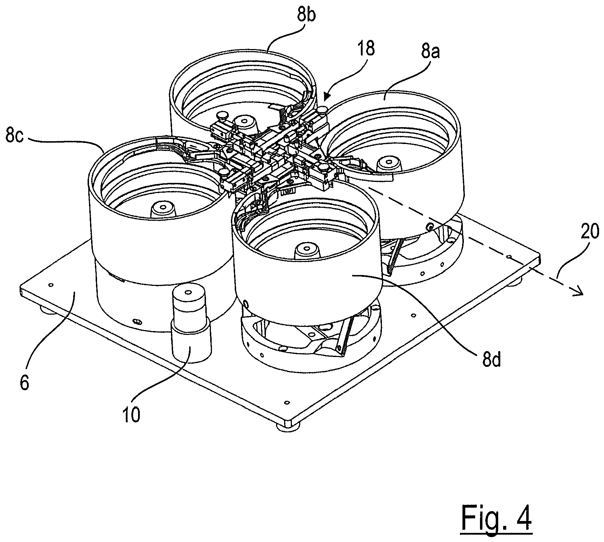

Figur 4 zeigt eine konkrete Ausführung des Ausführungsbeispiels gemäß Figur 1. Bei dieser Variante sind vier Zuführtöpfe 8a bis 8d auf der plattenförmig ausgeführten Deckfläche 6 gelagert und lassen sich über einen gemeinsamen Vibrationsantrieb 10 in Vibration versetzen. Die vereinzelten Aderendhülsen werden dann von einem Zuführtopfauslass zu einer gemeinsamen Vereinzelungseinrichtung 18 geführt und dann über eine gestrichelt angedeutete Zuführung 20 dem Crimpkopf 3 zugeführt. Diese Zuführung 20 ist schematisch nach rechts (Ansicht Figur 4) fördernd dargestellt. Die Förderrichtung hängt von der Art der Crimpmaschine 1 ab. So kann es beispielsweise vorteilhaft sein, wenn die Zuführung 20 aus der Ebene der Vereinzelungseinrichtungen 18 nach unten fördert. Die Zuführung 20 ist dann allen Zuführtöpfen 8 gemeinsam. Einzelheiten einer Zuführung 20 sind in der nach dem Prioritätsdatum dieser Anmeldung veröffentlichten Patentanmeldung DE 10 2017 102 618 beschrieben - hinsichtlich weiterer Details wird auf diese Anmeldung der Anmelderin verwiesen.

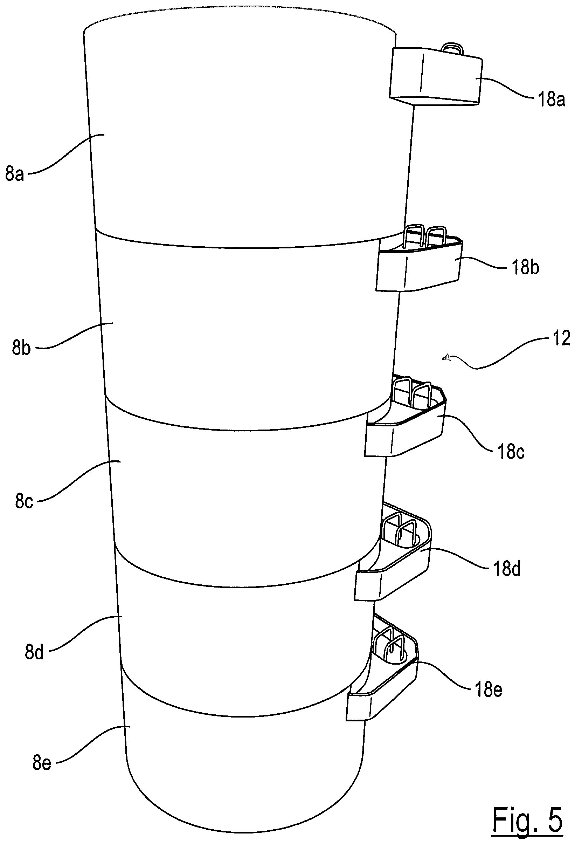

Figur 5 zeigt eine schematische Stapelanordnung, bei der in dem Stapel 12 fünf Zuführtöpfe 8a bis 8e direkt übereinanderliegend koaxial angeordnet sind. Die Vereinzelungseinrichtungen 18a bis 18e, von denen lediglich einige Details dargestellt sind, sind in der Variante gemäß Figur 5 ebenfalls in Axialrichtung des Stapels 12 übereinanderliegend angeordnet, wobei diese vorzugsweise in der gemeinsamen Zuführung (nicht dargestellt) münden.

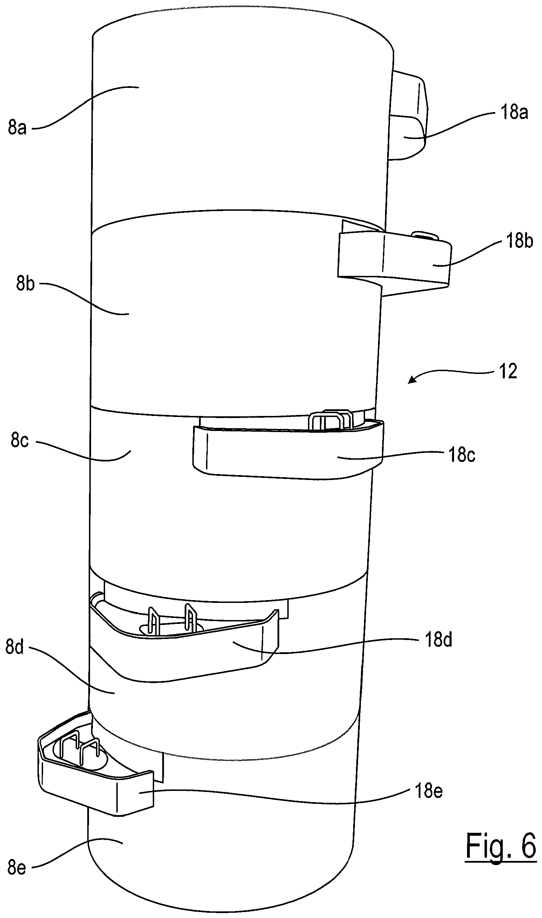

Figur 6 zeigt eine Variante des Stapels 12 bei der die Vereinzelungseinrichtungen 18a bis 18e in Umfangsrichtung versetzt zueinander angeordnet sind, so dass sie in der Darstellung gemäß Figur 6 auf einer spiralartigen Linie liegen.

In den Figuren 7 und 8 ist ein weiteres Ausführungsbeispiel dargestellt, bei dem fünf Zuführtöpfe 8a, 8b, 8c, 8d und 8e in einem etwa W-förmigen Muster (siehe strichpunktierte Linie in Figur 7) angeordnet sind. Dabei liegen die drei Zuführtöpfe 8a, 8b, 8c nebeneinander auf einer Geraden 22. Die beiden anderen Zuführtöpfe 8d, 8e liegen auf einer parallel dazu verlaufenden Geraden 24.

Die den Zuführtöpfen 8a bis 8e zugeordneten Vereinzelungseinrichtungen 18a, 18b, 18c, 18d und 18e sind dabei zu der gemeinsamen Zuführung 20 hinweisend ausgerichtet, über die die jeweiligen Aderendhülsen dem Crimpkopf 3 zugeführt werden. Bei dem in den Figuren 7 und 8 dargestellten Ausführungsbeispiel verläuft die Zuführung 20 zumindest im Bereich der Vereinzelungseinrichtungen 18a bis 18d im gleichen Parallelabstand zu den Geraden 22 bzw. 24 - mit anderen Worten gesagt, die Zuführung 20 verläuft abschnittsweise etwa mittig zwischen den beiden Zuführtopfreihen 8a, 8b, 8c, 8d, 8e.

Auch bei dem Ausführungsbeispiel gemäß den Figuren 7 und 8 sind die Zuführtöpfe 8 als Schwingfördertöpfe ausgeführt, wobei beispielsweise allen Zuführtöpfen 8 ein gemeinsamer Vibrationsantrieb 10 oder beispielsweise den auf den Geraden 22, 24 liegenden Zuführtöpfen 8a, 8b, 8c bzw. 8d, 8e jeweils ein gemeinsamer Vibrationsantrieb 10 (Schwingförderer) zugeordnet ist.

Die Ansteuerung der Zuführtöpfe 8, insbesondere der Vibrationsantriebe 10 erfolgt über eine Steuereinheit 26 der Crimpmaschine 1, die beispielsweise über Signalleitungen 28 oder ein Bussystem Steuersignale an die Vibrationsantriebe 10 / Zuführtöpfe 8 überträgt.

Eine erfindungsgemäß aufgebaute Speicheranordnung 4 ermöglicht einen äußerst kompakten Aufbau der Crimpmaschine 1, wobei durch die zentrale Ansteuerung mittels der Steuereinheit 26 eine automatische Konfektion unterschiedlicher Kabel- und Aderendhülsentypen ermöglicht ist.

Offenbart ist eine Crimpmaschine mit einer Speicheranordnung, die eine Vielzahl von Zuführtöpfen für vereinzelte Kontaktelemente aufweist.

### Bezugszeichenliste:

- 1: Crimpmaschine
- 2: Zuführeinrichtung
- 3: Crimpkopf
- 4: Speicheranordnung
- 6: Deckfläche
- 8: Zuführtopf
- 10: Vibrationsantrieb
- 12: Stapel
- 14: Halterung
- 16: Schwenkeinrichtung
- 18: Vereinzelungseinrichtung
- 20: Zuführung
- 22: Gerade
- 24: Gerade
- 26: Steuereinheit
- 28: Signalleitung

## Patentansprüche

1. Crimpmaschine zum Verpressen von Kontaktelementen, vorzugsweise Aderendhülsen, mit einem Endabschnitt eines Leiters, beispielsweise eines Kabelendes mit einer Speicheranordnung (4) für vereinzelte Kontaktelemente und einer Einrichtung zum Transport der Kontaktelemente, zu einem Crimpkopf (3), wobei die Speicheranordnung (4) mehrere Zuführtöpfe (8) aufweist, von denen zumindest einige mit einem gemeinsamen Vibrationsantrieb (10) ausgeführt sind, und die über eine gemeinsame Steuereinheit (26) ansteuerbar sind, **dadurch gekennzeichnet, dass** den Zuführtöpfen (8) eine gemeinsame Zuführung (20) zum Transport der Kontaktelemente zum Crimpkopf (3) zugeordnet ist, und dass die Zuführtöpfe (8) und der Vibrationsantrieb (10) an eine Deckfläche (6) gekoppelt sind.

2. Crimpmaschine nach Patentanspruch 1, wobei alle Zuführtöpfe (8) mit dem gemeinsamen Vibrationsantrieb (10) ausgeführt sind.

3. Crimpmaschine nach einem der vorhergehenden Patentansprüche, wobei mehr als zwei Zuführtöpfe (8) vorgesehen sind.

4. Crimpmaschine nach einem der vorhergehenden Patentansprüche, wobei die Zuführtöpfe (8) nebeneinanderliegend in zumindest einer Horizontalebene angeordnet sind.

5. Crimpmaschine nach einem der Patentansprüche 1 bis 3, wobei die Zuführtöpfe (8) übereinanderliegend angeordnet sind.

6. Crimpmaschine nach Patentanspruch 5, wobei die Zuführtöpfe (8) an einer Halterung (14) zueinander beabstandet und/oder verstellbar aufgenommen sind.

7. Crimpmaschine nach Patentanspruch 5 oder 6, mit einer Schwenkeinrichtung (16) zum Ausschwenken zumindest eines Zuführtopfs (8) aus einer Arbeitsposition.

8. Crimpmaschine nach Patentanspruch 4, wobei die Zuführtöpfe (8) auf einem gemeinsamen Teilkreis oder nach einem Muster, vorzugsweise einem V- oder W-förmigen Muster angeordnet sind.

9. Crimpmaschine nach einem der vorhergehenden Patentansprüche, wobei bis zu sieben Zuführtöpfe (8) vorgesehen sind.

## Claims

1. Crimping machine for crimping contact elements, preferably ferrules, with an end section of a conductor, for example a cable end, with a storage arrangement (4) for separated contact elements and a device for transporting the contact elements to a crimp head (3), wherein the storage arrangement (4) has several feeding bowls (8), at least some of which are designed with a common vibration drive (10), and which can be driven via a common control unit (26), **characterized in that** a common feed (20) is associated with the feeding bowls (8) for transporting the contact elements to the crimp head (3), and that the feeding bowls (8) and the vibration drive (10) are coupled to a cover surface (6).

2. Crimping machine according to patent claim 1, wherein all feeding bowls (8) are configured with the common vibration drive (10).

3. Crimping machine according to one of the preceding patent claims, wherein more than two feeding bowls (8) are provided.

4. Crimping machine according to one of the preceding patent claims, wherein the feeding bowls (8) are arranged side by side in at least a horizontal plane.

5. Crimping machine according to one of patent claims 1 to 3, wherein the feeding bowls (8) are arranged one above the other.

6. Crimping machine according to patent claim 5, wherein the feeding bowls (8) are accommodated on a holder (14) at a distance from each other and/or in an adjustable manner.

7. Crimping machine according to patent claim 5 or 6, with a pivot device (16) for swinging out at least one feeding bowl (8) from a working position.

8. Crimping machine according to patent claim 4, wherein the feeding bowls (8) are arranged on a common pitch circle or according to a pattern, preferably a V-shaped or W-shaped pattern.

9. Crimping machine according to one of the preceding patent claims, wherein up to seven feeding bowls (8) are provided.

## Revendications

1. Machine de sertissage pour le pressage d'éléments de contact, de préférence d'embouts, avec une section d'extrémité d'un conducteur, par exemple une extrémité de câble avec un agencement réservoir (4) pour des éléments de contact isolés et un dispositif de transport des éléments de contact, en une tête de sertissage (3), dans laquelle l'agencement réservoir (4) présente plusieurs pots d'alimentation (8), dont au moins certains sont réalisés avec un entraînement de vibration (10) commun, et qui peuvent être commandés par le biais d'un dispositif de commande (26) commun, **caractérisée en ce qu'**une alimentation (20) commune est associée aux pots d'alimentation (8) pour le transport des éléments de contact à la tête de sertissage (3), et **en ce que** les pots d'alimentation (8) et l'entraînement de vibration (10) sont couplés à une surface de recouvrement (6).

2. Machine de sertissage selon la revendication 1, dans laquelle tous les pots d'alimentation (8) sont réalisés avec l'entraînement de vibration (10) commun.

3. Machine de sertissage selon l'une quelconque des revendications précédentes, dans laquelle plus de deux pots d'alimentation (8) sont prévus.

4. Machine de sertissage selon l'une quelconque des revendications précédentes, dans laquelle les pots d'alimentation (8) sont agencés les uns à côté des autres dans au moins un plan horizontal.

5. Machine de sertissage selon l'une quelconque des revendications 1 à 3, dans laquelle les pots d'alimentation (8) sont agencés les uns au-dessus des autres.

6. Machine de sertissage selon la revendication 5, dans laquelle les pots d'alimentation (8) sont reçus de manière espacée et/ou réglable les uns par rapport aux autres au niveau d'un support (14).

7. Machine de sertissage selon la revendication 5 ou 6, avec un dispositif de pivotement (16) pour le pivotement au moins d'un pot d'alimentation (8) d'une position de travail.

8. Machine de sertissage selon la revendication 4, dans laquelle les pots d'alimentation (8) sont agencés sur un cercle partiel commun ou selon un modèle, de préférence un modèle en forme de V ou de W.

9. Machine de sertissage selon l'une quelconque des revendications précédentes, dans laquelle jusqu'à sept pots d'alimentation (8) sont prévus.
